# EUROPEAN PATENT APPLICATION

(11) **EP 4 161 146 A1**
(43) Date of publication of application: **05.04.2023**
(21) Application number: 21200341.2
(22) Date of filing: 30.09.2021
(51) Int. Cl.: H04W 36/00, H04W 36/32, H04W 84/06

(54) **HANDOVER IMPROVEMENT FOR 5G AIR-TO-GROUND-SYSTEM**

(71) Applicant: SkyFive AG, 82024 Taufkirchen (DE)
(72) Inventor: Martins, Pedro, 2640-377 Igreja Nova - Mafra (PT); Ohm, Michael, 70372 Stuttgart (DE)
(74) Representative: Bendele, Tanja

(57) **Abstract**

The invention relates to a method for handover of a transceiver equipment from a serving cell to a target cell in a cellular communications network, said serving cell belonging to a first base station and said target cell belonging to a second base station, and said target cell being selected from a group of neighbor cells being better than the serving cell by an offset, wherein the method comprises the steps of: I. transmitting a measurement report to the first base station, said measurement report comprising information on a neighbor cell selected from the group of neighbor cells, based on i. a distance criterion, and optionally ii. a trajectory criterion, II. receiving a handover command from the first base station, said handover command comprising instruction for handover to the selected neighbor cell becoming the target cell, and III. completing handover with the second base station. Moreover, the invention relates to a transceiver equipment comprising means for carrying out the method as well as to a computer program product comprising instructions to carry out the method and to a data carrier signal carrying the computer program product.

## Description

The invention relates to a method for handover of a transceiver equipment from a serving cell to a target cell in a cellular communications network, said serving cell belonging to a first base station and said target cell belonging to a second base station, and said target cell being selected from a group of neighbor cells being better than the serving cell by an offset, wherein the method comprises the steps of: I. transmitting a measurement report to the first base station, said measurement report comprising information on a neighbor cell selected from the group of neighbor cells, based on i. a distance criterion, and optionally ii. a trajectory criterion, II. receiving a handover command from the first base station, said handover command comprising instruction for handover to the selected neighbor cell becoming the target cell, and III. completing handover with the second base station. Moreover, the invention relates to a transceiver equipment comprising means for carrying out the method as well as to a computer program product comprising instructions to carry out the method and to a data carrier signal carrying the computer program product.

5G is the fifth-generation technology standard for broadband cellular networks. The air interface defined by Third Generation Partnership Project (3GPP) for 5G is known as New Radio (NR), and the specification is subdivided into two frequency bands: Frequency Range 1 (FR1) that includes sub-6 GHz frequency bands and Frequency Range 2 (FR2) that includes frequency bands from 24.25 GHz to 52.6 GHz.

Mobility in 5G NR RRC_CONNECTED state is achieved through handover mechanism enabling a transceiver equipment (user equipment, UE/on-board equipment, OBE) to move seamlessly to another cell in the same or in a different base station (gNodeB) within the coverage area of the network. The handover mechanism involves reassigning an ongoing session handled by one cell into another and basically proceeds as follows: The UE/OBE reports a measurement report with neighbor cell PCI (Physical Cell Identity) and signal strength/load/quality to the gNodeB of the serving cell, which takes the decision to start handover procedure to the gNodeB of the best target cell (which may be the same gNodeB of the source cell). Then, handover procedure is completed in the target cell.

A UE/OBE in the network can be in different Radio Resource Control (RRC) states, in particular either in idle (RRC_IDLE state: the UE just camps into a cell and does not have any active signalling or data bearers to the gNodeB), connected (RRC_CONNECTED state: the gNodeB will allocate resources to the UEs/OBEs and there will be an active signalling on the data and control channels) or inactive (RRC_INACTIVE state: the RRC connection is suspended) state.

In RRC_CONNECTED state, the mobility functionality ensures that the network is able to maintain service continuity, by keeping the RRC connection while the UE/OBE moves. Typically, the gNodeB of the serving cell configures the UE/OBE to perform measurements and report them in accordance with the measurement configuration. The measurements can be based on Synchronization Signal (SS)/Physical Broadcast Channel (PBCH) blocks (SSB) or Channel State Information (CSI) Reference Signal resources. The measurement configuration is provided by means of dedicated signalling, using the RRC Reconfiguration message, including the measurement object (MeasObj), the reporting configuration (ReportConfig), the measurement identity (MeasID) and the quantity configuration (QuantityConfig).

The measurements of the UE/OBE can be based on Reference Signal Received Power (RSRP), Reference Signal Received Quality (RSRQ) or Signal to Interference and Noise Ratio (SINR). Measurement reporting can be periodic or event driven. Periodic reports are simply sent to the gNodeB at regular intervals, from the moment the UE/OBE receives the measurement configuration and has completed some measurements. The event driven reports are based on the UE providing measurement results in the form of Measurement Report messages when certain conditions are fulfilled.

In this context, 3GPP (Third Generation Partnership Project) specification TS 38.331 has specified the following events defined for 5G NR: Event A1 (serving cell becomes better than threshold), Event A2 (serving cell becomes worse than threshold), Event A3 (neighbor cell becomes offset better than serving cell), Event A4 (neighbor becomes better than threshold), Event A5 (serving cell becomes worse than a first threshold and neighbor becomes better than a second threshold), Event A6 (neighbour becomes offset better than a secondary cell), Event B1 (IRAT neighbour cell becomes better than threshold) and Event B2 (serving cell becomes worse than a first threshold and IRAT neighbor cell becomes better than a second threshold).

In the open space environment of the air-to-ground system, it is expected that the UE/OBE will be able to measure several neighbor cells with similar signal levels, due to the relatively low propagation loss in free space and, if applicable, non-omnidirectional aircraft antenna pattern.

Consequently, it is possible for the UE/OBE to identify the best neighbor as a cell from a gNodeB that is much further away than another neighbor, located closer to the source gNodeB.

This may result in failed handovers when performing Random Access procedure in the target cell beyond the planned cell range. Even if the handover preparation and subsequent execution are successful, there is a high probability of a ping-pong handover back to the original cell, or even that the closer neighbor will quickly become the best one, thus triggering a new handover, shortly after the first one.

It is therefore the object of the invention to provide a handover algorithm and related devices to improve the handover procedure in the avionics environment. In particular, a handover algorithm should be provided appropriately identifying the most suitable target cell in a cellular communications network, in particular adhering to the 5G NR standard, not just in terms of signal measurements but also by considering neighbor gNodeB proximity and an aircraft trajectory with regards to the neighbor gNodeBs.

The object of the invention is solved by a method according to claim 1, a transceiver equipment according to claim 12 as well as a computer program product according to claim 14 and a data carrier signal carrying the computer program product according to claim 15. Embodiments of the invention are illustrated in detail in dependent claims and description.

According to the invention, the object is solved by a method for handover of a transceiver equipment from a serving cell to a target cell in which the target cell is selected from a group of neighbor cells being better than the serving cell by an offset, preferably satisfying the Event A3 condition, basing on
i. a distance criterion selecting the neighbor cell that has the lowest propagation delay compared to the remaining neighbor cells and optionally to the serving cell, and, additionally or alternatively,
ii. a trajectory criterion selecting the neighbor cell that has the highest changing, in particular increasing or decreasing, preferably decreasing, rate of propagation delay compared to the remaining neighbor cells and optionally to the serving cell.

Thus, when using the improved handover algorithm, the decision of the neighbor cell to be included in the measurement report will not be strictly based on the measured signal strength/load/quality of that neighbor cell (that must still satisfy the Event A3 criteria), but also on a distance or trajectory criterion.

Event A3 will be triggered when a neighbor cell becomes better than the serving cell by an offset and is normally configured using a threshold and a hysteresis value. The offset can be either positive or negative. In a standard UE/OBE behaviour, the event is triggered if the entering condition is met during a determined time-to-trigger period, after which a number of Measurement Report messages can be sent, separated by a configured report interval time. No additional conditions are considered for triggering the RRC message transmission towards the gNodeB.

In doing so, Event A3 provides a handover triggering mechanism based upon relative measurement results, e.g. it can be configured to trigger when the RSRP of a neighbor cell is higher than the RSRP of the serving cell. RSRP is designed to capture the signal strength of the cell and is the commonly used measurement for handover measurements, normally using the SS/PBCH block. It is obtained from the Synchronization Signal (SS)-Reference Signal Received Power (RSRP) capturing the signal strength of a beam when the measurements are performed on the SS/PBCH block.

SS-RSRP is the linear average power received from a single Resource Element allocated to the Secondary Synchronization Signal (SSS). The measurement time resource(s) for SS-RSRP are confined within SS/PBCH block Measurement Time Configuration (SMTC) window duration. SS-RSRP measurements can be performed in RRC_IDLE, RRC_INACTIVE and RRC_CONNECTED states.

The mobility within the 5G air-to-ground system is foreseen to be done intra-frequency only, so both the serving and neighbor cells will use the same SS/PBCH block center frequency and subcarrier spacing. As the 5G air-to-ground system implementation is based on TDD and the system is time-synchronized, the UE/OBE will know when the SS/PBCH blocks are transmitted by the gNodeB from its own Timing Advance information and can estimate how far the measured neighbors are. Then, according to the invention, the UE/OBE will select the most appropriate neighbor for inclusion in the measurement report.

Thus, a subject matter of the invention is a method for handover of a transceiver equipment, in particular a UE or OBE, from a serving cell to a target cell in a cellular communications network, in particular adhering to the 5G New Radio Standard, in particular said serving cell belonging to a first base station and said target cell belonging to a second base station, and said target cell being selected from a group of neighbor cells being better than the serving cell, in particular the Reference Signal Received Power and/or Reference Signal Received Quality and/or Signal to Interference and Noise Ratio of whom being higher than the Reference Signal Received Power and/or Reference Signal Received Quality and/or Signal to Interference and Noise Ratio of the serving cell, by an offset, the method comprising the steps of:
I. transmitting a measurement report to the first base station, said measurement report comprising information on a neighbor cell selected from the group of neighbor cells, basing on
   i. a distance criterion selecting the neighbor cell as having a lower propagation delay compared to the remaining neighbor cells and/or to the serving cell, and/or
   ii. a trajectory criterion selecting the neighbor cell as having a highest changing, in particular increasing or decreasing, preferably decreasing, rate of propagation delay compared to the remaining neighbor cells and/or to the serving cell,
II. receiving a handover command from the first base station, said handover command comprising instruction for handover to the selected neighbor cell becoming the target cell, and
III. completing handover with the second base station.

In this context, the target cell may preferably be selected from 1) a group of neighbor cells the Reference Signal Received Power of whom being higher than the Reference Signal Received Power of the serving cell, and/or 2) a group of neighbor cells the Reference Signal Received Quality of whom being higher than the Reference Signal Received Quality of the serving cell, and/or 3) a group of neighbor cells the Signal to Interference and Noise Ratio of whom being higher than the Signal to Interference and Noise Ratio of the serving cell. Particularly preferably, the target cell may be selected from 1), and optionally 2), and optionally 3).

According to the invention, the estimated propagation delay for the serving cell and/or the neighbor cells, in particular for the selected neighbor cell and the remaining neighbor cells, may be used as indication of how far the UE/OBE is from each gNodeB and optionally how fast the UE/OBE is moving towards the respective gNodeB. This offers the advantage to have an additional criterion for selection of the best neighbor cell becoming the target cell: a distance criterion and/or a trajectory criterion.

The distance criterion taking into consideration only the estimated distance towards the neighbor gNodeBs is relatively straightforward. In this case, from the several neighbors that fulfil the respective event condition, in particular the Event A3 condition, the UE/OBE will report the one that, according to its propagation delay estimation, is closer to its current position even if the reported signal strength/load/quality, preferably RSRP and/or RSRQ and/or SINR, is lower.

The trajectory criterion taking into consideration the variation of the estimated distance towards the neighbor gNodeBs relies on several measurements received from the physical layer. Thus, based on a configurable number of measurement samples, the UE/OBE will be able to deduct if the aircraft is moving towards a neighbor gNodeB, away from a neighbor gNodeB or keeping an almost constant distance from a neighbor gNodeB. In particular, the UE/OBE performs at least two measurement samples, preferably two to ten measurement samples, particularly preferably five to 100 measurement samples. The reported neighbor cell will be the one that seems the most adequate, considering the current trajectory (higher increasing/decreasing rate of the propagation delay/distance estimations) and that satisfies the respective event condition in particular the Event A3 condition. An additional absolute distance condition may preferably be added, to limit handovers to very distant sites. In particular, handovers to gNodeBs being away from the UE/OBE by an absolute distance of greater than or equal to 100 km, preferably greater than or equal to 150 km, particularly preferably greater than or equal to 300 km, may be excluded.

The measurement report preferably contains measurement information based on SS/PBCH block(s), in particular containing measurement results per SS/PBCH block, measurement results per cell based on SS/PBCH block(s) and SS/PBCH block(s) indexes. Additionally or alternatively, the measurement report may contain measurement information based on CSI-RS resources with the measurement report including measurements per beam (beam index and reporting quantity), in particular containing measurement results per CSI-RS resource, measurement results per cell based on CSI-RS resource(s) and CSI-RES resource measurement identifiers. Preferably, the measurement information are present at the transceiver equipment. More preferably, the measurement information are obtained and evaluated by the transceiver equipment, prior to being transmitted to the base station in the form of a measurement report.

In a preferred embodiment of the invention, the measurement report is based on Reference Signal Received Power (RSRP) measurement, Reference Signal Received Quality (RSRQ) measurement and/or Signal to Interference and Noise ratio (SINR) measurement, preferably filtered at Layer 3. RSRP measurement is generated and reported at both Layer 1 (Physical Layer) and Layer 3 (RRC Layer). For Example, a UE can measure SS-RSRP at Layer 1 when sending CSI to the gNodeB and provides results at Layer 3 when sending measurement reports. Layer 1 measurements are useful for procedures which must react with minimal delay, e.g. beam management procedures which require the UE/OBE to rapidly switch between beams. Layer 3 measurements are useful for radio resource management decisions which require a long term view of channel conditions.

Layer 3 measurements can be beam level or cell level measurements which can be reported within the measurement report. Beam level measurements are generated directly from Layer 1 measurements by applying Layer 3 filtering. Cell level measurements are derived from Layer 1 measurements using certain rules (see 3GPP TS 38.331) for beam consolidation and selection.

3GPP TS 38.133 further defines different values for RSRP reported at Layer 3 as can be seen from the table below:

| **Reported value** | **Measured quantity (L3 SS-RSRP)** | **Unit** |
|---|---|---|
| RSRP_0 | SS-RSRP < -156 | dBm |
| RSRP_1 | -156 ≤ SS-RSRP < -155 | dBm |
| RSRP_2 | -155 ≤ SS-RSRP < -154 | dBm |
| RSRP_3 | -154 ≤ SS-RSRP < -153 | dBm |
| RSRP_4 | -153 ≤ SS-RSRP < -152 | dBm |
| RSRP_5 | -152 ≤ SS-RSRP < -151 | dBm |
| RSRP_6 | -151 ≤ SS-RSRP < -150 | dBm |
| RSRP_7 | -150 ≤ SS-RSRP < -149 | dBm |
| RSRP_8 | -149 ≤ SS-RSRP < -148 | dBm |
| RSRP_9 | -148 ≤ SS-RSRP < -147 | dBm |
| RSRP_10 | -147 ≤ SS-RSRP < -146 | dBm |
| RSRP_11 | -146 ≤ SS-RSRP < -145 | dBm |
| RSRP_12 | -145 ≤ SS-RSRP < -144 | dBm |
| RSRP_13 | -144 ≤ SS-RSRP < -143 | dBm |
| RSRP_14 | -143 ≤ SS-RSRP < -142 | dBm |
| RSRP_15 | -142 ≤ SS-RSRP < -141 | dBm |
| RSRP_16 | -141 ≤ SS-RSRP < -140 | dBm |
| RSRP_17 | -140 ≤ SS-RSRP < -139 | dBm |
| RSRP_18 | -139 ≤ SS-RSRP < -138 | dBm |
| ··· | ··· | ··· |
| RSRP_111 | -46 ≤ SS-RSRP < -45 | dBm |
| RSRP_112 | -45 ≤ SS-RSRP < -44 | dBm |

| **Reported value** | **Measured quantity (L3 SS-RSRP)** | **Unit** |
|---|---|---|
| RSRP_113 | -44 ≤ SS-RSRP < -43 | dBm |
| RSRP_114 | -43 ≤ SS-RSRP < -42 | dBm |
| RSRP_115 | -42 ≤ SS-RSRP < -41 | dBm |
| RSRP_116 | -41 ≤ SS-RSRP < -40 | dBm |
| RSRP_117 | -40 ≤ SS-RSRP < -39 | dBm |
| RSRP_118 | -39 ≤ SS-RSRP < -38 | dBm |
| RSRP_119 | -38 ≤ SS-RSRP < -37 | dBm |
| RSRP_120 | -37 ≤ SS-RSRP < -36 | dBm |
| RSRP_121 | -36 ≤ SS-RSRP < -35 | dBm |
| RSRP_122 | -35 ≤ SS-RSRP < -34 | dBm |
| RSRP_123 | -34 ≤ SS-RSRP < -33 | dBm |
| RSRP_124 | -33 ≤ SS-RSRP < -32 | dBm |
| RSRP_125 | -32 ≤ SS-RSRP < -31 | dBm |
| RSRP_126 | - 31 ≤ SS-RSRP | dBm |
| RSRP_127 | Infinity | dBm |

The full RSRP range comprises 128 entries and is defined from -156 dBm to -31 dBm with 1 dBm resolution. This means, a reported value of 0 means SS-RSRP is less than -156 dBm, whereas a reported value of 126 is greater than or equal to -31 dBm. The minimum value is aligned with the latest LTE specifications, while the highest value is extended to account for the UE/OBE receiver beamforming capabilities.

Preferably, Layer 3 filtering may be done according to the invention to remove fast fading and reduce short term variations in the measurement results. The measurement filtering and consolidation processes executed by the UE/OBE to obtain Layer 3 cell level measurements from beam measurements is required because cell reselection and handover operate at cell level and not at beam level.

Layer 3 filtering is a memory-based averaging procedure where each measurement performed by the UE is filtered based on *Fₙ*=(1―*a*) × *F*_{*n-*1} + *a* × *Measₙ,* where *Fₙ* is the updated filtered measurement result, *F*_{*n*-1} is the previous filtered measurement result, *a* = 0.5^{k/4} where k is the filtering coefficient and *Measₙ* is the latest received measurement result from the physical layer at cell level or beam level. The several measurements taken from the physical layer, denoted as *Measₙ,* will be crucial in the improved handover algorithm according to the invention. From each one of these, the UE will take the SS-RSRP and will also estimate the propagation delay.

In a particularly preferred embodiment of method according to the invention, propagation delay and optionally an increasing/decreasing rate of propagation delay variation for the neighbor cells may be estimated by the transceiver equipment comparing reception of at least one SS/PBCH block from the neighbor cells and from the serving cell. This means, propagation delay for the serving cell may be directly derived from the Timing Advance used, since the Timing Advance value represents the amount of time needed to advance the uplink transmission from UE/OBE to gNodeB and thus corresponds to the download transmission time of the SS/PBCH block from gNodeB to UE/OBE also. The Timing Advance is a measured value sent to the UE/OBE by the base station as part of the Timing Advance Command.

For the neighbor cells, the UE/OBE may evaluate how late/early the neighbor SS/PBCH blocks are transmitted from its own Timing Advance and the time difference between the reception of the SS/PBCH from the source cell and the neighbor cells. In case the SS/PBCH block from a neighbor cell is received later than the SS/OBCH block from the serving cell, addition of the time difference of reception to the Timing Advance of the serving cell is required. In contrast, in case the SS/PBCH block from a neighbor cell is received earlier than the SS/PBCH block from the serving cell, the time difference of reception has to be subtracted from the Timing Advance of the serving cell. Thus, it is particularly preferred for the propagation delay for the neighbor cells to be estimated by the transceiver equipment adding or subtracting the time difference of reception between at least one SS/PBCH block from the neighbor cells and from the serving cell to the Timing Advance of the serving cell.

According to the invention, reception of at least one SS/PBCH block, in particular only one SS/PBCH block, may be used for propagation delay estimation. Usually, SS/PBCH blocks are transmitted in SSB bursts, grouped in SSB burst sets. A SSB burst set consists of different numbers of SSB depending on the operating frequency (fc): for fc < 3GHz (FR1) the maximum number of SSB is 4, for fc = 3GHz to 6 GHz (FR1) the maximum number of SSB is 8 and for fc > 6 GHz (FR2) the maximum number of SSB is 64 within one burst set. The SSB periodicity can be configured for each cell in the range of 5, 10, 20, 40, 80 or 160 ms. Accordingly, SMTC (SSB-based Measurement Timing Configuration) window periodicity can be set to 5, 10, 20, 40, 80 or 160 ms.

The SMTC window introduced by 3GPP in 5G NR defines the duration (1, 2, 3, 4 or 5 ms) and periodicity than can used to restrict the UE/OBE measurement on certain resources. Like this, when configuring Layer 3 measurements the gNodeB may preferably provide the UE with an SMTC window defining a periodic time window during which the UE can perform its measurements.

Based on the time difference between its own SS/PBCH block and the ones from the measured neighbors, the UE/OBE will be able to estimate how far the measured neighbors are and select the most appropriate one for inclusion in the Measurement Report message towards the gNodeB, which may not necessarily be the highest one. Thus, in a more preferred embodiment of the method according to the invention, the distance criterion and optionally the trajectory criterion is applied even if one of the remaining neighbor cells is better, in particular has a highest Reference Signal Received Power and/or Reference Signal Receive Quality and/or Signal to Interference and Noise Ratio, than the selected neighbor cell.

After the transceiver equipment had carried out step I. transmitting a measurement report to the first base station, the first base station takes decision to start handover procedure and transmits a handover command to the transceiver equipment. The transceiver equipment carries out step II. receiving the handover command from the first base station and step III. completing handover with the second base station.

In this context, the transceiver equipment has to synchronize with the second base station, i.e. perform Random Access (RA) Procedure which is normally a contention free three step procedure. In contention free Random Access (CFRA), a RA preamble is allocated by the base station to the transceiver equipment (RA Preamble Assignment). Then, the transceiver equipment transmits the preamble on a Random Access Channel (RACH) to the base station, initiating the RA procedure with a RA Request message (MSG1). The base station detects the preamble transmission and sends a RA Response message (MSG2) to complete the RA procedure. If the transceiver equipment receives a response containing an RA preamble identifier which is the same as the identifier contained in the transmitted RA preamble, the response is successful.

Alternatively, the RA Procedure may be a contention based four step procedure. In contention based Random Access (CBRA), the transceiver equipment randomly selects an RA preamble sequence from the set of sequences available in the cell and transmits the preamble on a Random Access Channel (RACH) to the base station. By transmitting the preamble, the transceiver equipment initiates the RA procedure with a RA Request message (MSG1). The base station detects the preamble transmission and sends a RA Response message (MSG2).

If the transceiver equipment receives a response containing an RA preamble identifier which is the same as the identifier contained in the transmitted RA preamble, the response is successful. The transceiver equipment then transmits a scheduled transmission message (MSG3) over the Physical Uplink Shared Channel (PUSCH). After the transceiver equipment sends MSG3, a contention resolution timer of 8, 16, 24, 32, 40, 48, 56 or 64 ms starts. If the transceiver equipment considers the contention resolution successful by receiving contention resolution message (MSG4), it stops the timer and the RA procedure is completed.

In 5G NR, Random Access supports 13 types of PRACH preamble formats for FR1/FR2 known as Format 0/1/2/3, Format A1/A2/A3, Format B1/B2/B3/B4, Format C0/C2 which can be grouped into two categories: Short sequence PRACH preambles having a sequence length of L = 139 and long sequence PRACH preambles having a sequence length of L = 839. The former are designed to target the small/normal cell and indoor deployment scenarios, whereas the latter can be used for very large cells (up to 100 km).

The preambles consist of two parts: Cyclic Prefix (CP) and (preamble) Sequence, possibly in repetitions. CP is used to avoid the effect of interference caused by multipath propagation while the sequence allows identification of each RA attempt. In addition, a gap or Guard Period (GP) is used to avoid interference with the next following sub-frame. The duration of the gap depends on the cell size and corresponds to the maximum round trip delay in the cell. Like this, GP length as being the difference between Preamble duration CP and Sequence duration is roughly the distance that an electromagnetic wave can travel during GP divided by 2. Thus, the four different long sequence PRACH preamble formats specified by 3GPP TS 38.211 accommodate different cell ranges as can be seen from the table below:

| Format | Sequence length (L) | Subcarrier spacing | CP duration | Sequence duration | GP Duration | Cell range |
|---|---|---|---|---|---|---|
| 0 | 839 | 1.25 kHz | 103.13 µs | 800 µs | 96.88 µs | 14.5 km |
| 1 | 839 | 1.25 kHz | 684.38 µs | 2 * 800 µs | 715.63 µs | 102.6 km |
| 2 | 839 | 1.25 kHz | 152.60 µs | 4 * 800 µs | 647.40 µs | 22.9 km |
| 3 | 839 | 5 kHz | 103.13 µs | 4 * 200 µs | 96.88 µs | 14.5 km |

The respective cell range listed above is the maximum supported cell radius calculated using two criteria of which the most restrictive is taken: one based on CP duration, the other on GP duration.

Considering the above, for a delay spread of 0 µs (assuming a pure line of sight environment), the maximum cell range is obtained for PRACH preamble format 1, slightly over 100 km, which is not sufficient for cell radii of up to 300 km. Therefore, the PRACH preambles need to be transmitted with a timing advance value, a Timing Advance Offset (TAO), in deviation from the 3GPP standard. The TAO is determined iteratively depending on the maximum cell range C of the cell the communication between the base station and transceiver equipment is taking place in (serving cell).

Thus, in a particularly preferred embodiment of the invention, step III. handover is completed by an iterative mechanism comprising transmission of at least one PRACH preamble with a Timing Advance Offset (TAO) comprising t₀, ..., tₖ₋₁, tₖ, ..., tₙ (n ∈ 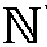 ), in particular comprising an initial starting TAO to, various preceding TAOs tₖ₋₁ and various k^{th} TAOs tₖ, over a Random Access Channel to the second base station serving a maximum cell range C, said PRACH preamble being a long sequence PRACH preamble supporting a cell range of r kilometres (r ∈ 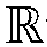 +) which is less than the maximum cell range C (C > r ∈ 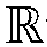 +), the iterative mechanism comprising the steps of:
IIIa. transmitting the PRACH preamble with an initial starting TAO t₀, said starting TAO to being calculated by the transceiver equipment depending on the propagation delay for the selected neighbor cell (Nₓ), and
Illb1. determining a valid Random Access Response being received within a predetermined waiting interval, or
IIIb2. determining no valid Random Access Response being received within a predetermined waiting interval and transmitting the PRACH preamble with a k^{th} TAO tₖ, said k^{th} TAO tₖ being calculated by adding and/or subtracting a multiple of t as being a function of r to a preceding TAO tₖ₋₁, and optionally
Illb3. repeating steps IIIb1 and IIIb2 until a valid Random Access Response is being received.

This means, after performing step IIIa., the UE/OBE waits for a valid Random Access Response and determines if it has been (IIIb1.) or not has been (IIIb2.) received within a predetermined waiting interval. If step IIIb1. has already been successful, the procedure ends immediately. Otherwise, step IIIIb2. is performed, followed by step b3. in which the UE/OBE again waits for a valid Random Access Response and determines if it has been (IIIb1. ― second iteration) or not has been (IIIb2. ― second iteration) received within a predetermined waiting interval, and so on. In this sense, the particularly preferred embodiment of the invention is adapted to let the UE/OBE finally receiving a valid Random Access Response, i.e. completing handover to the target cell.

The RA procedure according to the invention relies on an iterative mechanism based on partitions of the planned cell range into r kilometres intervals. Several TAOs are tested, corresponding to several positions of the transceiver equipment (UE/OBE) within the cell. The transceiver equipment transmits the PRACH preamble in advance, targeting the PRACH window at the base station (gNodeB), until reception of a valid RA Response. According to the invention, a valid RA response is understood to mean a RA Response containing a PRACH preamble identifier (ID) which is the same as the identifier contained in the PRACH preamble transmitted as being a reply to a PRACH preamble that arrived wholly in the related detection window at the base station. In turn, the valid RA response is received by the transceiver equipment within a predetermined waiting interval. The transceiver equipment waits for that RA response within a RA response window, but if the transceiver equipment does not receive a response within the RA response window or fails to verify the response, the response fails.

The method foresees that if a PRACH preamble sent by the transceiver equipment with an initial TAO does not get a successful answer, the PRACH preamble is sent with a second TAO, said second TAO being different from the initial TAO. The same applies for a subsequent TAO (tₖ) if a preceding TAO (tₖ₋₁) is not getting a successful answer. Preferably, each k^{th} TAO tₖ is different from its preceding TAO tₖ₋₁ and/or any two TAOs are different from one another.

Particularly preferably, the k^{th} TAO tₖ is calculated by adding and/or subtracting a multiple of t = 13107.2 * r * T_{c} to a preceding TAO tₖ₋₁. Thus, the k^{th} TAO (k ∈ 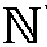 ) preferably corresponds to a chunk representing an interval of r kilometres which is a part of the maximum cell range C.

The above equation applying for 5G NR is based on various mathematical considerations. The TAO corresponds to the round trip propagation delay between the UE/OBE and the gNodeB. This can be calculated as 2 * 1000* r km / c, where r is the cell range supported by the preamble and c is the speed of light (in m/s). Further, the TAO is applied by the UE/OBE from Timing Advance (T_{A}) as T_{A} * 16 * 64 /2^{µ}* T_{c}, where µ is the numerology. Thus, T_{A} can be calculated as: T_{A} *16 * 64 * T_{c} = 2 * 1000 * r / c ⇔ T_{A} = 1000 * r / (2^{9-µ} * c *T_{c}) ⇔ T_{A} = 6553.6 * r / 2^{9-µ}. Consequently: TAO = (6553.6 * r / 2^{9-µ}) * 16 * 64 / 2^{µ} * T_{c} = 13107.2 * r * T_{c}. Let T_{A} be equal to 372, for example, which corresponds to TAO = 372 * 16 * 64 / 2 T_{c} = 190464 T_{c}, where T_{c} is the basic time unit in 5G NR and as per 3GPP TS 38.211 can be expressed as 1/(480 * 10³ * 4096) * 10⁶ µs = 100/196608 µs [corresponds to 0.509 ns]. Then, T_{A} = 372 implies 96.875 µs which leads to 29.0625 km considering the light speed (0.3 km/µs). Since the distance to be taken into account is half of the round trip delay, T_{A} = 372 finally corresponds to 14.531 km.

Analogously, in 4G or LTE, let T_{A} be equal to 2976, for example, which corresponds to TAO = 2976 Tₛ, where Tₛ (with Tₛ/T_{c} = 64) is the basic time unit in LTE and as per 3GPP TS 38.211 can be expressed as 1/(15 * 10³ * 2048) * 10⁶ µs = 100/3072 µs [corresponds to 32.552 ns]. Then, T_{A} = 2976 implies 96.875 µs which leads to 29.0625 km considering the light speed (0.3 km/µs). Since the distance to be taken into account is half of the round trip delay, T_{A} = 2976 finally corresponds to 14.531 km. Thus, in 4G or LTE, mathematical correlation between the respective TAO and the kilometers the transceiver equipment is distanced from the base station is preferably given by the following equation: TAO = 204.8 * r * Tₛ for LTE.

In general, according to the invention, it is preferred for the k^{th} TAO tₖ to be greater than or equal to 0 and less than or equal to 10000 * 2^{10-µ} * T_{c}, preferably greater than or equal to 0 and less than or equal to 8000 * 2^{10-µ} * T_{c}, particularly preferably greater than or equal to 0 and less than or equal to 5000 * 2^{10-µ} * T_{c}.

The iterative mechanism according to the invention, in particular in case of inter gNodeB handover, starts with the TAO interval corresponding to the estimated propagation delay for the selected neighbor cell. Like this, the transceiver equipment calculates the initial starting TAO t₀ estimating the distance to the base station of the selected neighbor cell, in particular the base station of the target cell. The UE/OBE preferably selects the most appropriate TAO interval to start the iterative mechanism, containing the estimated neighbor distance.

In contrast, in case of an intra gNodeB handover, the search will start with the TAO interval that contains the current timing advance of the serving cell, because the UE/OBE uplink timing is the same in the source and target cells.

The TAO search duration can be optimized by adapting the order in which the hypotheses are tested starting from initial TAO t₀. Like this, in a more particularly preferred embodiment of the method according to the invention, the iterative mechanism comprises the steps of:
IIIa. transmitting the PRACH preamble with an initial starting TAO t₀, said starting TAO to being calculated by the transceiver equipment depending on the propagation delay for the selected neighbor cell, and
IIIb1'. determining a valid Random Access Response being received within a predetermined waiting interval, or
Illb2'. determining no valid Random Access Response being received within a predetermined waiting interval and transmitting the PRACH preamble with a k^{th} TAO tₖ, where tₖ = tₖ₋₁ + (-1)^{k}·kt, in particular with t = 13107.2 * r * T_{c} (5G/NR) or t = 204.8 * r * Tₛ (4G/LTE), and optionally
IIIb3'. repeating steps b1' and b2' until a valid Random Access Response is being received, or
IIIb1". determining a valid Random Access Response being received within a predetermined waiting interval, or
IIIb2". determining no valid Random Access Response being received within a predetermined waiting interval and transmitting the PRACH preamble with a k^{th} TAO tₖ, where tₖ = tₖ₋₁ + (-1)^{k-1}·kt, in particular with t = 13107.2 * r * T_{c} (5G/NR) or t = 204.8 * r * Tₛ (4G/LTE), and optionally
IIIb3". repeating steps IIIb1" and IIIb2" until a valid Random Access Response is being received.

Like this, steps IIIb1 to IIIb3 of the method according to the invention are preferably performed as steps IIIb1' to IIIb3' or IIIb1" to IIIb3", respectively or, in an alternative, may be performed as steps IIIb1' to IIIb3' and IIIb1" to IIIb3" in arbitrary order. In particular, step IIIb2. of the method according to the invention is performed as step IIIb2' or IIIb2", both being alternation steps alternating between increasing and decreasing TAOs, but having the difference of the starting direction. In steps IIIb1' to IIIb3', the subsequent PRACH preamble transmissions alternates from the initial starting TAO to in increments of t = 13107.2 * r * T_{c} (5G/NR) or t = 204.8 * r * Tₛ (4G/LTE) with lower TAOs first, whereas in steps IIIb1" to IIIb3", the subsequent PRACH preamble transmissions alternates from the initial starting TAO to in increments of t = 13107.2 * r* T_{c} (5G/NR) or t = 204.8 * r * Tₛ (4G/LTE) with higher TAOs first.

Thus, according to the invention, the k^{th} TAO (k ∈ 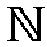 ) is determined using the mechanism according to the invention, preferably an alternation around the starting point (corresponding to the initial starting TAO t₀) according to method steps IIIb1' to IIIb3' and/or IIIb1" to IIIb3". If the TAO search or pre-alignment procedure reaches either the maximum or the minimum TAO values, the procedure carries on until the entire TAO search range of the target cell is covered. Thus, it is preferred for the iterative mechanism according to the invention, to carry on performing steps IIIb1 to IIIb3, in particular IIIb1' to IIIIb3' or IIIb1" to IIIIb3", if the preceding TAO tₖ₋₁ = 0 or tₖ₋₁ = 13107.2 * (C-r) * T_{c} (5G/NR), or alternatively tₖ₋₁ = 204.7 * (C-r) * Tₛ (4G/LTE).

The maximum cell range C represents the distance, the respective base station is serving for. Ideally, the cells are circularly shaped, but they may also possess any other shape, like a hexagon for example. The maximum cell range corresponds to a vector in any spatial direction, starting from the base station and ending at the UE/OBE, that defines the target coverage (minimum allowed RSRP level) or dominance (with regards to neighbor cells) area of the cell. In particular, the amount of the vector may be greater than or equal to 1 to greater than or equal to 500 km, preferably greater than or equal to 100 km, more preferably greater than or equal to 150 km, particularly preferably greater than or equal to 300 km. The maximum cell range (C ∈ 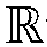 +) as well as the cell range (r ∈ 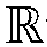 +) being supported by the PRACH preamble, is exemplarily given in kilometres to simplify calculation with the light speed. Within the scope of the invention, it may be converted into any unit of length known, e.g. in inch (0.0000254 km), foot (12 inches, 0.0003048 km), yard (3 feet, 0.0009144 km), terrestrial mile (5280 feet, 1.609344 m) and/or nautical mile (1.852 km).

In addition, in a particularly preferred embodiment of the iterative mechanism according to the invention, the PRACH preamble transmitted by the transceiver equipment to the target cell for handover may be a long sequence PRACH preamble of PRACH format 0 according to 3GPP communications standard, TS 38.211.

It is advantageous to use PRACH format 0 due to its suitable timing structure which corresponds to the lowest PRACH overhead and highest system efficiency. In addition PRACH preamble format 0 comprises just a single 800 µs PRACH preamble sequence. In this light, the RA procedure according to the invention may preferably rely on an iterative mechanism based on partitions of the planned cell range into 14.5 km intervals, the maximum cell range supported by PRACH format 0.

The method according to the present invention is particularly advantageous for ATG communication systems in which a network of base stations on the ground (ground units) communicates with on-board units or on-board equipments of aircrafts. The cell around each base station is usually large due to the distance to cover. However, each cell has a very low density of aircrafts. In this situation one or a limited number of on-board units per aircraft may be used as gateway or customer premises equipment (CPE) to further enable communication with user terminals of the respective air users. These user terminals may be dedicated terminals communicating over WIFI with the on-board unit or communicating with a usual mobile communication standard with the on-board unit, the on-board unit converting the 5G NR signals it got in the wireless or mobile communication signal required for communication with the air users.

Thus, in a particularly preferred embodiment of the invention the method is adapted to be used for air-to-ground communications, in particular between on-board units (on-board equipment) of an aircraft and base stations on the ground (ground units). Preferably, the transceiver equipment being an on-board equipment of an aircraft or as part of an aircraft and the base station being a ground unit. Particularly preferably, the on-board equipment may ensure a gateway function with a plurality of user terminals on board of the aircraft. The communication between the on-board equipment and the user terminals may be based on WIFI or on any other wireless standards.

Like this, the method according to the invention may advantageously be used to provide a 5G NR based direct air-to-ground (DATG) network with cells dedicated to serving sea or other areas in which propagation distances larger than 100 km occur, comprised of standard 5G gNodeB equipment and standard 5G onboard units carrying modified handover. Preferably, the transceiver equipment and/or the base stations may further be equipped with high-gain directive antennas to support large cell ranges further.

Moreover, a subject matter of the invention is a transceiver equipment, in particular a UE or OBE, configured for handover from a serving cell to a target cell in a cellular communications network, for carrying out a method according to the invention. In particular, the transceiver equipment comprises
- means for selecting a neighbor cell from a group of neighbor cells being better than the serving cell, in particular the Reference Signal Received Power and/or Reference Signal Received Quality and/or Signal to Interference and Noise Ratio of whom being higher than the Reference Signal Received Power and/or Reference Signal Received Quality and/or Signal to Interference and Noise Ratio of the serving cell, by an offset, preferably means for determining and comparing propagation delay for the neighbor cells and/or for the serving cell, particularly preferably means for receiving at least one SS/PBCH block and determining the time difference of reception to be added and/or subtracted to the Timing Advance of the serving cell, and/or
- means for transmitting a measurement report, preferably based on Reference Signal Received Power measurement and/or Reference Signal Received Quality measurement and/or Signal to Interference and Noise Ratio measurement, to a first base station the serving cell is belonging to, and/or
- means for receiving a handover command, in particular comprising instruction for handover to the selected neighbor cell becoming the target cell, from the first base station, and/or
- means for completing handover with a second base station the target cell is belonging to. Optionally the transceiver equipment may further comprise
- means for transmitting a PRACH preamble with a Timing Advance Offset (TAO) comprising t₀, ..., tₖ₋₁, tₖ, ..., tₙ over a Random Access Channel to the second base station serving a maximum cell range C, said PRACH preamble being a long sequence PRACH preamble supporting a cell range of r kilometres which is less than the maximum cell range C, and/or
- means for calculating a k^{th} TAO tₖ by adding and/or subtracting a multiple of t as being a function of r, in particular a multiple of t = 13107.2 * r * T_{c} (5G/NR) or t = 204.8 * r * Tₛ (4G/LTE), to a preceding TAO tₖ₋₁,
- means for determining if a valid Random Access Response is received within a predetermined waiting interval.

Like this, the transceiver equipment according to the invention preferably comprises a measurement module to measure the serving cell and/or neighbor cell signal strength, in particular Reference Signal Received Power, and optionally signal strength and load, in particular Reference Signal Received Quality, and optionally signal quality, in particular Signal to Interference and Noise Ratio. Further, the transceiver equipment according to the invention may comprise a transmit module responsible for transmitting measurement reports and/or a receiving module adapted to receive radio communication signal according to a radio communication standard as 5G NR.

The transmit module may further comprise a PRACH module, responsible for transmitting PRACH preambles and means for selecting an initial TAO for issuing the first PRACH preamble as well as means for calculating subsequent TAOs for subsequent transmit of the PRACH preamble. The means for sending a PRACH preamble may further select, preferably randomly select, a sequence to be included in the PRACH preamble among a set of predefined sequences, in particular as foreseen in 5G NR standard. In addition, the transmit module may comprise means for checking if an acknowledgement of the PRACH preamble has been received from the base station in order to determine if additional PRACH preambles have to be transmitted or if the transmission of additional PRACH preambles can be stopped.

In a preferred embodiment, the transceiver equipment may be an on-board unit in an aircraft, in particular as a part of an aircraft, said on-board unit preferably acting as a gateway for further traffic distribution to user equipments on board of the aircraft. In particular, the transceiver equipment is acting as a CPE responsible for aggregating the data flows of several users on board of the aircraft. The users on-board communicating are preferably using a wireless communication scheme as WIFI or any other appropriate wired communication with an on-board communication controller. The on board communication controller may further comprise a gateway function aggregating/disaggregating on-board data and for converting the on-board used communication scheme to the ATG used communication scheme and vice versa.

Particularly preferably, at least one, preferably one to ten, most preferably two or three, on-board equipment would be available per aircraft. In this context, it is understood that not only aircraft could carry an on-board equipment implementing the features of a transceiver equipment according to the invention, but any other moving vehicle gathering several terminals on-board could be adapted to carry an on-board unit according to the invention. Alternatively, it will however be understood that the transceiver equipment according to the invention could also be a simple user equipment.

Another subject matter of the invention is a computer program product comprising instruction which, when the program is executed by a computer, cause the computer to carry out the method according to the invention.

Likewise, a subject matter of the invention is a data carrier signal carrying the computer program product.

If applicable, the functions of the various technical elements according to the invention may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

Even if the method and related devices according to the invention are preferably designed for 5G NR, they may also be applicable for 4G or LTE, and any later communications standard, as e.g. 6G, 7G and/or 8G, preferably for time-synchronized systems, such as 4G TDD. In particular, the UE in 4G TDD must synchronize with the target cell using the PSS and SSS signals that may be used to estimate the propagation delay towards these target cells. Further, PRACH preamble formats 0 and 1 in 5G NR are the same as PRACH preambles formats 0 and 3 in 4G or LTE.

The invention is illustrated by the figures in more detail without limiting the invention to these exemplary embodiments. They show:
- **Fig. 1a,b,c:**: different handover scenarios from serving cell to target cell
- **Fig. 2:**: propagation delay estimation from SS/PBCH blocks
- **Fig. 3:**: a TAO search or pre-alignment procedure according to the invention during handover to the target cell

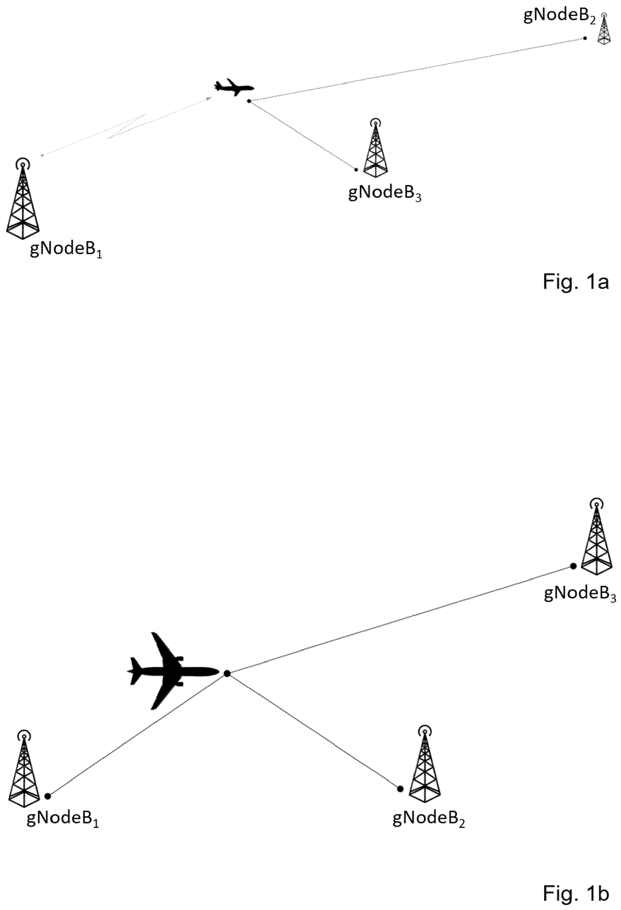

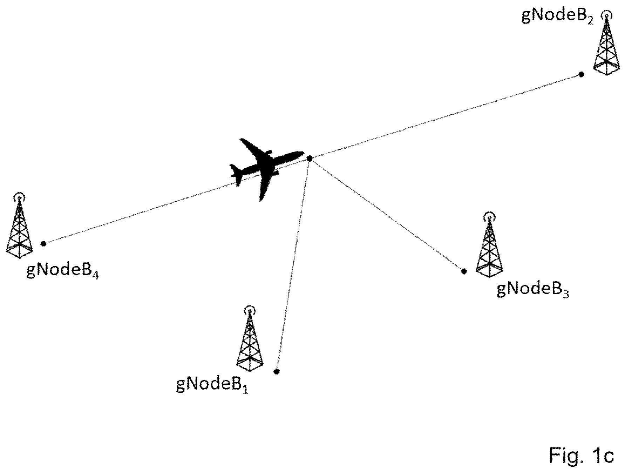

**Figures 1a, 1b** and **1c** disclose handover of a transceiver equipment on board of an aircraft (on-board equipment, OBE) from a serving cell (S) to a target cell (T), said serving cell belonging to a first base station gNodeB₁ (S-gNodeB) and the target cell belonging to a second base station gNodeB₂ (T-gNodeB), and said target cell (T) being selected from a group of neighbor cells (N₁, N₂, N₃) belonging to base stations gNodeB₂, gNodeB₃ and/or gNodeB₄ (N₁-gNodeB, N₂-gNodeB and/or N₃-gNodeB) and the RSRP of whom being higher than the RSRP of the serving cell (S). In doing so, selection of the respective neighbor cell (N_{x, x = 1, 2, 3}) to become the target cell (T) is either strictly based on the measured SS-RSRP of that neighbor cell that must still satisfy the Event A3 condition (see **Fig. 1a**) or may additionally be based on a distance criterion (see **Fig. 1b**) or trajectory criterion (see **Fig. 1c**).

In **Figure 1a****,** the OBE measures several neighbor cells with similar SS-RSRP levels and identifies the best neighbor cell as a cell from a gNodeB that is much further away than another neighbor located closer to the serving gNodeB. Thus, the first neighbor cell (N₁) being 150 km away from the OBE and having a filtered RSRP of -94 dBm is selected as target cell (T) instead of the second neighbor cell (N₂) being 50 km away from the OBE and only having a filtered RSRP of -96 dBm:

| Cell (gNodeB) | Distance to OBE | Filtered RSRP |
|---|---|---|
| S (gNodeB₁) | - | -101 dBm |
| N₁ = T (gNodeB₂) | 150 km | -94 dBm |
| N₂ (gNodeB₃) | 50 km | -96 dBm |

In **Figure 1b**, the OBE additionally applies the distance criterion according to the invention selecting the neighbor cell (N₁) as having a lower propagation delay compared to the remaining neighbor cell (N₂) and to the serving cell (S). In doing so, the OBE reports that one from the neighbor cells (N₁, N₂) fulfilling the Event A3 condition (A3 offset = 3 dBm) which is, according to its propagation delay estimation, closest to the current position of the OBE, even if the reported RRSP is lower. Thus, the first neighbor cell (N₁) being only 60 km away from the OBE and having a filtered RSRP of -98 dBm is selected as target cell (T) instead of the second neighbor cell (N₂) having a filtered RSRP of -96 dBm but being 80 km away from the OBE:

| Cell (gNodeB) | Distance to OBE | Filtered RSRP | Propagation delay (two way) |
|---|---|---|---|
| S (gNodeB₁) | 65 km | -102 dBm | 433 µs |
| N₁ = T (gNodeB₂) | 60 km | -98 dBm | 400 µs |
| N₂ (gNodeB₃) | 80 km | -96 dBm | 533 µs |

In **Figure 1c****,** the OBE additionally applies the trajectory criterion according to the invention selecting the neighbor cell (N₁) as having a higher decreasing rate of propagation delay compared to the remaining neighbor cells (N₂, N₂) and to the serving cell (S). In doing so, the OBE deducts, based on a configurable number of measurement samples, if the aircraft (trajectory = 1000 km/h) is moving towards a neighbor gNodeB, away from a neighbor gNodeB or keeping an almost constant distant from a neighbor gNodeB. The OBE reports that one from the neighbor cells (N₁, N₂, N₃) fulfilling the Event A3 condition (A3 offset = 3 dBm) to which the OBE is moving fastest, even if the reported RRSP is lower. Thus, the first neighbor cell (N₁) having a distance variation rate of -278 m/s but being 80 km away from the OBE and having a filtered RSRP of -98 dBm is selected as target cell (T) instead of the second neighbor cell (N₂) having a better filtered RSRP of -96 dBm and being only 70 km away from the OBE but having a distance variation rate of only -74 m/s:

| Cell (gNodeB) | Distance to OBE | Filtered RSRP | Distance Variation Rate |
|---|---|---|---|
| S (gNodeB₁) | 75 km | -102 dBm | not relevant |
| N₁ = T (gNodeB₂) | 80 km | -98 dBm | -278 m/s |
| N₂ (gNodeB₃) | 70 km | -96 dBm | -74 m/s |
| N₃ (gNodeB₄) | 75 km | -97 dBm | +278 m/s |

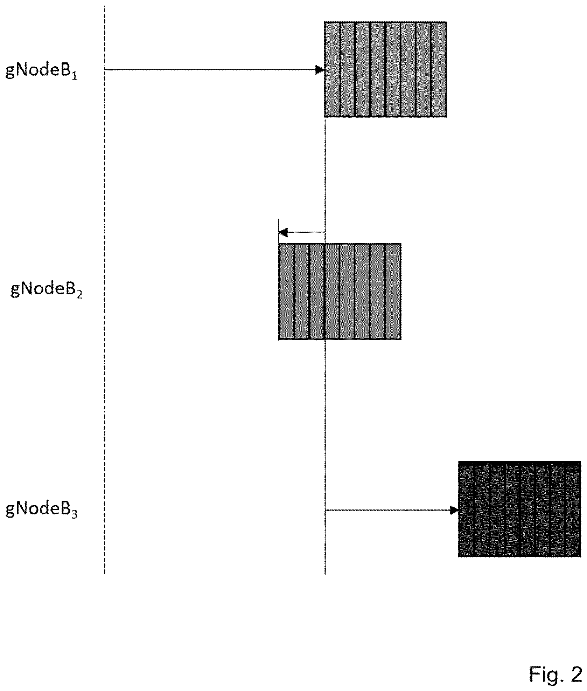

**Figure 2** discloses reception of a SS/PBCH block from the serving cell (S) belonging to a first base station gNodeB₁ (S-gNodeB) compared to reception of SS/PBCH blocks from the neighbor cells (N₁, N₂) belonging to a second base station gNodeB₂ (N₁-gNodeB) or a third base station gNodeB₃ (N₂-gNodeB), respectively. The transceiver equipment (UE/OBE) knows when the SS/PBCH blocks are transmitted by the respective base station (gNodeB) and can estimate the propagation delay for the serving cell and for the neighbor cells to determine how far it is from each gNodeB.

Starting from the estimated SS/PBCH block transmission time indicated by the dotted line, propagation delay for the serving cell (S) can be directly derived from the Timing Advance that is used in current connection. For the neighbor cells (N₁, N₂), the UE/OBE is able to evaluate how early/late the neighbor SS/PBCH blocks are transmitted from its own Timing Advance and the time difference between the reception of the SS/PBCH blocks from the serving cell (S) and the neighbor cells (N₁, N₂). In case of the second neighbor cell (N₂), the SS/PBCH block from gNodeB₃ is received later than the SS/PBCH block from gNodeB₁, requiring addition of the time difference of reception to the Timing Advance of the serving cell (S). In contrast, in case of the first neighbor cell (N₁), the SS/PBCH block from gNodeB₂ is received earlier than the SS/PBCH block from gNodeB₁, requiring subtraction of the time difference of reception from the Timing Advance of the serving cell (S). Since the UE/OBE is closer to gNodeB₂ than to gNodeB₁ or gNodeB₃, the first neighbor cell (N₁) is becoming the target cell (T).

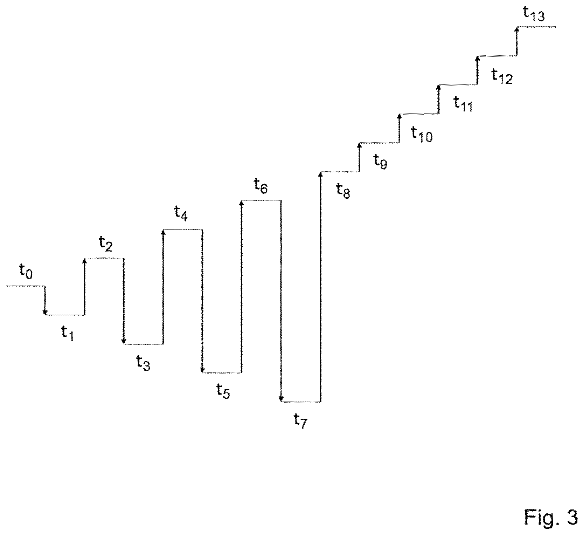

**Figure 3** discloses an iterative mechanism according to the invention for RA procedure during handover from a serving cell to a target cell having a planned maximum cell range C (here: 203 km). The TAO search starts with the TAO interval that contains the TAO corresponding to the estimated distance to the base station (second base station) of the target cell and is continued with optimized TAO search mechanism using an alternation around the point corresponding to said TAO to. In doing so, the iterative mechanism comprises steps IIIb1' to Illb3' alternating from the initial starting TAO to (here: 761856 T_{c}) in increments of t = 190464 T_{c} with lower TAOs first. If the TAO search reaches either the maximum or the minimum TAO (here: 0 T_{c}), the procedure carries on until the entire TAO search range of the target cell is covered:

| TAO | | T_{A} | Interval | |
|---|---|---|---|---|
| to | 761856 T_{c} | 1488 | ca. 58.0 km | ca. 72.5 km |
| t₁ | 571392 T_{c} | 1116 | ca. 43.5 km | ca. 58.0 km |
| t₂ | 952320 T_{c} | 1860 | ca. 72.5 km | ca. 87.0 km |
| t₃ | 380928 T_{c} | 744 | ca. 29.0 km | ca. 43.5 km |
| t₄ | 1142784 T_{c} | 2232 | ca. 87.0 km | ca. 101.5 km |
| t₅ | 190464 T_{c} | 372 | ca. 14.5 km | ca. 29.0 km |
| t₆ | 1333248 T_{c} | 2604 | ca. 101.5 km | ca. 116.0 km |
| t₇ | 0 Tc | 0 | 0 km | ca. 14.5 km |
| t₈ | 1523712 T_{c} | 2976 | ca. 116.0 km | ca. 130.5 km |
| t₉ | 1714176 T_{c} | 3348 | ca. 130.5 km | ca. 145.0 km |
| t₁₀ | 1904640 T_{c} | 3720 | ca. 145.0 km | ca. 159.5 km |
| t₁₁ | 2095104 T_{c} | 4092 | ca. 159.5 km | ca. 174.0 km |
| t₁₂ | 2285568 T_{c} | 4464 | ca. 174.0 km | ca. 188.5 km |
| t₁₃ | 2473984 T_{c} | 4832 | ca. 188.5 km | ca. 203.0 km |

| | | | | |
|---|---|---|---|---|
| * calculated for 5G NR (µ = 1) | | | | |

## Claims

1. Method for handover of a transceiver equipment from a serving cell (S) to a target cell (T) in a cellular communications network, said serving cell (S) belonging to a first base station and said target cell (T) belonging to a second base station, and said target cell (T) being selected from a group of neighbor cells (N₁, N₂, ..., Nₓ, ..., Nₘ) being better than the serving cell (S) by an offset, **characterised in that** the method comprises the steps of:
I. transmitting a measurement report to the first base station, said measurement report comprising information on a neighbor cell (Nₓ) selected from the group of neighbor cells (N₁, N₂, ..., Nₓ, ..., Nₘ), basing on
i. a distance criterion selecting the neighbor cell (Nₓ) as having a lower propagation delay compared to the remaining neighbor cells (N₁, N₂, ..., Nₘ) and/or to the serving cell (S), and/or
ii. a trajectory criterion selecting the neighbor cell (Nₓ) as having a higher changing rate of propagation delay compared to the remaining neighbor cells (N₁, N₂, ..., Nₘ) and/or to the serving cell (S),
II. receiving a handover command from the first base station, said handover command comprising instruction for handover to the selected neighbor cell (Nₓ) becoming the target cell (T), and
III. completing handover with the second base station.

2. Method according to claim 1, **characterised in that**
the measurement report is based on Reference Signal Received Power measurement, Reference Signal Received Quality measurement and/or Signal to Interference and Noise Ratio measurement, in particular filtered at Layer 3.

3. Method according to claim 1 or 2, **characterised in that**
propagation delay for the neighbor cells (N₁, N₂, ..., Nₓ, ..., Nₘ) is estimated by the transceiver equipment comparing reception of at least one SS/PBCH block from the neighbor cells (N₁, N₂, ..., Nₓ, ..., Nₘ) and from the serving cell (S).

4. Method according to claim 3, **characterised in that**
propagation delay for the neighbor cells (N₁, N₂, ..., Nₓ, ..., Nₘ) is estimated by the transceiver equipment adding or subtracting the time difference of reception to the Timing Advance of the serving cell (S).

5. Method according to any one of claims 1 to 4, **characterised in that** the distance criterion and optionally the trajectory criterion is applied even if one of the remaining neighbor cells (N₁, N₂, ..., Nₘ) is better, in particular has a higher Reference Signal Received Power and/or Reference Signal Received Quality and/or Signal to Interference and Noise Ratio, than the selected neighbor cell (Nₓ) and the serving cell (S).

6. Method according to any one of claims 1 to 5, **characterised in that** handover is completed by an iterative mechanism comprising transmission of at least one PRACH preamble with a Timing Advance Offset (TAO) comprising to, ..., tₖ₋₁, tₖ,..., tₙ over a Random Access Channel to the second base station serving a maximum cell range C, said PRACH preamble being a long sequence PRACH preamble supporting a cell range of r kilometres which is less than the maximum cell range C, the iterative mechanism comprising the steps of:
IIIa. transmitting the PRACH preamble with an initial starting TAO t₀, said starting TAO to being calculated by the transceiver equipment depending on the propagation delay for the selected neighbor cell (Nₓ), and
IIIb1. determining a valid Random Access Response being received within a predetermined waiting interval, or
IIIb2. determining no valid Random Access Response being received within a predetermined waiting interval and transmitting the PRACH preamble with a k^{th} TAO tₖ, said k^{th} TAO tₖ being calculated by adding and/or subtracting a multiple of t as being a function of r to a preceding TAO tₖ₋₁, and
IIIb3. repeating steps IIIb1 and IIIb2 until a valid Random Access Response is being received.

7. Method according to claim 6, **characterised in that** the k^{th} TAO tₖ being calculated by adding and/or subtracting a multiple of t = 13107.2 * r * T_{c} to a preceding TAO tₖ₋₁.

8. Method according to claim 6 or 7, **characterised in that** steps IIIb1 to IIIb3 are performed as steps
IIIb1'. determining a valid Random Access Response being received within a predetermined waiting interval, or
IIIb2'. determining no valid Random Access Response being received within a predetermined waiting interval and transmitting the PRACH preamble with a k^{th} TAO tₖ, where tₖ = tₖ₋₁ + (-1)^{k}·kt, and
IIIb3'. repeating steps b1' and b2' until a valid Random Access Response is being received,
or
IIIb1". determining a valid Random Access Response being received within a predetermined waiting interval, or
IIIb2". determining no valid Random Access Response being received within a predetermined waiting interval and transmitting the PRACH preamble with a k^{th} TAO tₖ, where tₖ = tₖ₋₁ + (-1)^{k-1}·kt, and
IIIb3". repeating steps IIIb1" and IIIb2" until a valid Random Access Response is being received.

9. Method according to any one of claims 6 to 8, **characterised in** carrying on performing steps IIIb1 to Illb3, in particular IIIb1' to IIIIb3' or IIIb1" to IIIIb3", if the preceding TAO tₖ₋₁ = 0 or tₖ₋₁ = 13107.2 * (C-r) * T_{c}.

10. Method according to any one of claims 6 to 9, **characterised in that** the PRACH preamble is a long sequence PRACH preamble of PRACH format 0 according to 3GPP communications standard, TS 38.211.

11. Iterative method according to any one of claims 1 to 10, **characterised in** being adapted to be used for air-to-ground communications, in particular the transceiver equipment being an on-board equipment of an aircraft and the first base station and/or the second base station being a ground unit.

12. Transceiver equipment configured for handover from a serving cell (S) to a target cell (T) in a cellular communications network, said transceiver equipment comprising
- means for selecting a neighbor cell (Nx) from a group of neighbor cells (N₁, N₂, ..., Nₓ, ..., Nₘ) being better than the serving cell (S) by an offset, in particular means for determining and comparing propagation delay for the neighbor cells (N₁, N₂, ..., Nₓ, ..., Nₘ) and/or for the serving cell (S),
- means for transmitting a measurement report to a first base station the serving cell (S) is belonging to,
- means for receiving a handover command from the first base station,
- means for completing handover with a second base station the target cell (T) is belonging to,
in particular for carrying out the method according to any one of claims 1 to 11.

13. Transceiver equipment according to claim 12, **characterised in**
being an on-board equipment in an aircraft, said on-board equipment acting as a gateway for further traffic distribution to user equipments on board of the aircraft.

14. Computer program product comprising instructions which, when the program is executed by a computer, cause the computer to carry out the method according to any one of claims 1 to 11.

15. Data carrier signal carrying the computer program product of claim 14.

## Amended claims

### Amended claims in accordance with Rule 137(2) EPC.

1. Method for handover of a transceiver equipment from a serving cell (S) to a target cell (T) in a cellular communications network, said serving cell (S) belonging to a first base station and said target cell (T) belonging to a second base station, and said target cell (T) being selected from a group of neighbor cells (N₁, N₂, ... , Nₓ, ..., Nₘ) whose Reference Signal Received Power and/or Reference Signal Received Quality and/or Signal to Interference and Noise Ratio is higher than the Reference Signal Received Power and/or Reference Signal Received Quality and/or Signal to Interference and Noise Ratio of the serving cell (S) by an offset, **characterised in that** the transceiver equipment is a user equipment (UE) or on-board equipment (OBE) and comprises means for selecting a neighbor cell from a group of neighbor cells,
wherein the method comprises the steps of:
I. transmitting a measurement report to the first base station, said measurement report comprising information on a neighbor cell (Nₓ) selected from the group of neighbor cells (N₁, N₂, ... , Nₓ, ..., Nₘ), basing on
i. a distance criterion selecting the neighbor cell (Nₓ) as having a lower propagation delay compared to the remaining neighbor cells (N₁, N₂, ... , Nₘ) and/or to the serving cell (S), and/or
ii. a trajectory criterion selecting the neighbor cell (Nₓ) as having a higher changing rate of propagation delay compared to the remaining neighbor cells (N₁, N₂, ... , Nₘ) and/or to the serving cell (S),
II. receiving a handover command from the first base station, said handover command comprising instruction for handover to the selected neighbor cell (Nₓ) becoming the target cell (T), and
III. completing handover with the second base station.

2. Method according to claim 1, **characterised in that**
the measurement report is based on Reference Signal Received Power measurement, Reference Signal Received Quality measurement and/or Signal to Interference and Noise Ratio measurement, in particular filtered at Layer 3.

3. Method according to claim 1 or 2, **characterised in that**
propagation delay for the neighbor cells (N₁, N₂, ..., Nₓ, ... , Nₘ) is estimated by the transceiver equipment comparing reception of at least one SS/PBCH block from the neighbor cells (N₁, N₂, ... , Nₓ, ... , Nₘ) and from the serving cell (S).

4. Method according to claim 3, **characterised in that**
propagation delay for the neighbor cells (N₁, N₂, ..., Nₓ, ..., Nₘ) is estimated by the transceiver equipment adding or subtracting the time difference between reception of at least one SS/PBCH block from the neighbor cells and from the serving cell to the Timing Advance of the serving cell (S).

5. Method according to any one of claims 1 to 4, **characterised in that** the distance criterion and optionally the trajectory criterion is applied even if one of the remaining neighbor cells (N₁, N₂, ..., Nₘ) has a higher Reference Signal Received Power and/or Reference Signal Received Quality and/or Signal to Interference and Noise Ratio, than the selected neighbor cell (Nₓ) and the serving cell (S).

6. Method according to any one of claims 1 to 5, **characterised in that** handover is completed by an iterative mechanism comprising transmission of at least one PRACH preamble with a Timing Advance Offset (TAO) comprising t₀, ..., tₖ₋₁, tₖ, ..., tₙ over a Random Access Channel to the second base station serving a maximum cell range C, said PRACH preamble being a long sequence PRACH preamble supporting a cell range of r kilometres which is less than the maximum cell range C, the iterative mechanism comprising the steps of:
IIIa. transmitting the PRACH preamble with an initial starting TAO t₀, said starting TAO to being calculated by the transceiver equipment depending on the propagation delay for the selected neighbor cell (Nₓ), and
IIIb1. determining a valid Random Access Response being received within a predetermined waiting interval, or
IIIb2. determining no valid Random Access Response being received within a predetermined waiting interval and transmitting the PRACH preamble with a k^{th} TAO tₖ, said k^{th} TAO tₖ being calculated by adding or subtracting a multiple of t as being a function of r to a preceding TAO tₖ₋₁, and
IIIb3. repeating steps IIIb1 and IIIb2 until a valid Random Access Response is being received.

7. Method according to claim 6, **characterised in that**
the k^{th} TAO tₖ being calculated by adding and/or subtracting a multiple of t = 13107.2 * r * T_{c} to a preceding TAO tₖ₋₁, in particular Tc is the basic time unit in 5G NR and as per 3GPP TS 38.211 can be expressed as 1/(480 * 10³ * 4096) * 106 µs = 100/196608 µs [corresponds to 0.509 ns].

8. Method according to claim 6 or 7, **characterised in that**
steps IIIb1 to Illb3 are performed as steps
Illb1'. determining a valid Random Access Response being received within a predetermined waiting interval, or
IIIb2'. determining no valid Random Access Response being received within a predetermined waiting interval and transmitting the PRACH preamble with a k^{th} TAO tₖ, where tₖ = tₖ₋₁ + (-1)^{k}·kt, and
IIIb3'. repeating steps IIIb1' and IIIb2' until a valid Random Access Response is being received,
or
Illb1". determining a valid Random Access Response being received within a predetermined waiting interval, or
IIIb2". determining no valid Random Access Response being received within a predetermined waiting interval and transmitting the PRACH preamble with a k^{th} TAO tₖ, where tₖ = tₖ₋₁ + (-1)^{k-1}·kt, and
IIIb3". repeating steps IIIb1" and IIIb2" until a valid Random Access Response is being received.

9. Method according to any one of claims 6 to 8, **characterised in** carrying on performing steps IIIb1 to Illb3, in particular Illb1' to IIIIb3' or IIIb1" to IIIIb3", if the preceding TAO tₖ₋₁ = 0 or tₖ₋₁ = 13107.2 * (C-r) * T_{c}.

10. Method according to any one of claims 6 to 9, **characterised in that** the PRACH preamble is a long sequence PRACH preamble of PRACH format 0 according to 3GPP communications standard, TS 38.211.

11. Iterative method according to any one of claims 1 to 10, **characterised in** being adapted to be used for air-to-ground communications, in particular the transceiver equipment being an on-board equipment of an aircraft and the first base station and/or the second base station being a ground unit.

12. Transceiver equipment, wherein the transceiver equipment is a user equipment (UE) or on-board equipment (OBE), configured for handover from a serving cell (S) to a target cell (T) in a cellular communications network, said transceiver equipment comprising - means for selecting a neighbor cell (Nx) from a group of neighbor cells (N₁, N₂, ..., Nₓ, ..., Nₘ), whose Reference Signal Received Power and/or Reference Signal Received Quality and/or Signal to Interference and Noise Ratio is higher than the Reference Signal Received Power and/or Reference Signal Received Quality and/or Signal to Interference and Noise Ratio of the serving cell (S) by an offset, in particular means for determining and comparing propagation delay for the neighbor cells (N₁, N₂, ..., Nₓ, ..., Nₘ) and/or for the serving cell (S),
- means for transmitting a measurement report to a first base station the serving cell (S) is belonging to,
- means for receiving a handover command from the first base station,
- means for completing handover with a second base station the target cell (T) is belonging to,
in particular for carrying out the method according to any one of claims 1 to 11.

13. Transceiver equipment according to claim 12, **characterised in**
being an on-board equipment in an aircraft, said on-board equipment acting as a gateway for further traffic distribution to user equipments on board of the aircraft.

14. Computer program product comprising instructions which, when the program is executed by a computer, cause the computer to carry out the method according to any one of claims 1 to 11.

15. Data carrier signal carrying the computer program product of claim 14.
